# EUROPÄISCHE PATENTSCHRIFT

(11) **EP 1 608 228 B1**
(45) Veröffentlichungstag und Bekanntmachung des Hinweises auf die Patenterteilung: **28.02.2007**
(21) Anmeldenummer: 04720861.6
(22) Anmeldetag: 16.03.2004
(51) Int. Cl.: A22C 11/02, A22C 13/00

(54) **VERFAHREN ZUR AUTOMATISIERTEN HERSTELLUNG VON WURST IM TEXTILDARM**
METHOD FOR THE AUTOMATED PRODUCTION OF SAUSAGES IN A TEXTILE CASING
PROCEDE DE FABRICATION AUTOMATISEE DE SAUCISSES EN BOYAU TEXTILE

(30) Priorität: 21.03.2003 DE 10313878
(43) Veröffentlichungstag der Anmeldung: 28.12.2005
(73) Patentinhaber: Kalle GmbH, 65203 Wiesbaden (DE)
(72) Erfinder: NIEDERSTÄTTER, Walter, 65343 Eltville (DE); LANG, Bernd, Adolf, 65193 Wiesbaden (DE); KÜNZEL, Udo, 65366 Geisenheim (DE); GROLIG, Gerhard, 64546 Mörfelden-Walldorf (DE); WOLF, Peter, 49179 Ostercappeln (DE)
(74) Vertreter: Plate, Jürgen
(86) Internationale Anmeldenummer: PCT/EP2004/002692
(87) Internationale Veröffentlichungsnummer: WO 2004/082387

(56) Entgegenhaltungen:
- DE-A- 2 330 774
- US-A- 2 410 206
- US-A- 4 466 984
- US-A- 5 490 541

## Beschreibung

Die Erfindung betrifft ein Verfahren zur automatisierten Herstellung von Würsten, wobei eine schlauchförmige Wursthülle abschnittsweise von einer Vorratsrolle abgezogen, auf das Füllrohr einer Füllmaschine gerafft und abgetrennt wird. Verwendet wird dabei eine schlauchförmige Wursthülle in Rollenform mit der Wurst mit einer Länge von 1 m oder mehr produziert werden kann.

Als Alternative zu den Natur- und Kollagendärmen und auch zu den Därmen aus regenerierter Cellulose sind Textildärme seit langem bekannt, beispielsweise in Form von eiweißbeschichtetem Gewebegerüst. Dabei wird zunächst ein (nahtloser) textiler Hohlschlauch aus Baumwoll-, Kunststoff- oder Seidenfäden hergestellt. Dieser wird in bestimmte Längen geteilt, die dann auf ein Druckluft führendes Rohr aufgezogen werden. Von dort werden die Teillängen durch eine Vorrichtung geführt, in der eine Kollageneiweißmasse auf die Oberfläche des Schlauches aufgetragen wird. Die Auftragsmenge wird so bemessen, daß die Lücken im Gewebe geschlossen werden. Überschüssige Eiweißmasse wird mit einer Rakel abgezogen. Nach dem Trocknen können die Schlauchteile aufgewickelt werden. Der eiweißbeschichtete Gewebegerüstdarm ist durchlässig für Wasserdampf und eignet sich daher für die Herstellung von schnittfesten Rohwurstsorten (G. Effenberger, *Wursthüllen - Kunstdarm,* 2. Aufl. [1991], Holzmann Buchverlag, Bad Wörishofen, S. 25 und 106 - 108). Auf diese Weise können jedoch nur relativ kurze Darmabschnitte hergestellt werden, was für ein automatisches Füllsystem nachteilig ist.

Bekannt sind auch räucherbare acrylatbeschichtete Textildärme (DE-A 31 47 519). Das darin verwendete textile Grundmaterial kann ein verfestigtes Vlies, ein Spinnvlies oder ein Gewebe aus Naturfasern und/oder Kunstfasern sein. Erwähnt sind Fasern aus Baumwolle, Leinen, Wolle, Seide, Celluloseester, Regeneratcellulose, Polyester, Polyamid, Polyacrylnitril, Polypropylen und Polyvinylchlorid. Beschichtet ist das Grundmaterial mit einem Acrylat-Emulsionspolymerisat auf Basis von lipophilen Estern der (Meth)acrylsäure mit niederen Alkanolen, insbesondere von Butylacrylat. Aufgetragen wird die Beschichtung mit Hilfe von üblichen Beschichtungsvorrichtungen, wie Luftrakel, Walzenrakel, Gummituchrakel usw. Durch entsprechende Wahl der Beschichtung kann der acrylatbeschichtete Textildarm wasserdampf- und gasdurchlässig eingestellt werden, so daß er auch für Dauerwurst geeignet ist.

Ein Textildarm läßt sich durch entsprechendes Zuschneiden und Zusammennähen in praktisch beliebiger, auch unregelmäßiger Form herstellen, beispielsweise als Blase.

Für die Verarbeitung auf einer automatischen Füllanlage ist der bisher übliche Textildarm praktisch nicht geeignet. Er hat allgemein die Form von genähten Abschnitten, die einzeln - normalerweise von Hand - gefüllt werden. Das ist sehr arbeitsintensiv und damit kostenaufwendig.

Die DE-A 101 11 136 betrifft ein Verfahren und eine Vorrichtung zum Abtrennen von Schlauchabschnitten von einer flachgelegten, schlauchförmigen Endlos-Rollenware. Die Rollenware kann aus einem Textilmaterial bestehen. Sie weist in kurzen Abständen Querverschlüssen bzw. Quernähte auf. Vor dem Füllen wird die Rollenware stets gewässert.

In der DE-A 32 14 018 ist ein Verfahren zur Herstellung von abgepackten Fleischwaren offenbart, bei dem eine schlauchförmige Wursthülle von einer Vorratsrolle abgezogen und mechanisch aufgeweitet wird, wodurch der Außenumfang der Hülle um 5 bis 30 % zunimmt. Die Hülle wird dann abschnittsweise - ohne sie dabei zu raffen - auf das Füllrohr einer Füllvorrichtung geschoben und dort festgehalten. Das ist notwendig, da der Umfang der Hülle größer ist als der Außenumfang des Füllrohrs. Beim Füllen wird das Füllrohr und/oder der Hüllenabschnitt parallel zur Fließrichtung des Wurstbräts voneinander wegbewegt. Als Materialien für die Hülle selbst sind gegebenenfalls faserverstärkte Cellulose, Kollagen und Kunststoff genannt. Die Hüllen sind in der Regel vorbefeuchtet oder sie werden mit Wasser angefeuchtet, damit sie ausreichend dehnbar sind.

Ein Verfahren und eine Vorrichtung zur automatisierten Herstellung von Würsten sind in der DE-A 32 23 725 (≈ US-A 4 580 316 und 4 625 362) offenbart. In diesem Verfahren wird zunächst Schlauchmaterial in größeren Längen abschnittsweise von einer Vorratsrolle abgezogen, auf dem Füllrohr einer Wurstfüllmaschine axial zusammengerafft und abgetrennt. Die Hülle wird dann portionsweise mit Brät gefüllt, abgeteilt und verschlossen. Die konkret beschriebene Füllmaschine umfaßt 2 auf einer Revolverscheibe angeordnete Füllrohre. Auf das eine Rohr wird weiteres Schlauchmaterial gerafft, während das geraffte Schlauchmaterial von dem anderen Rohr beim Füllen wieder abgezogen wird. Die Art des Schlauchmaterials ist nicht näher definiert. Für Herstellung von Pizza-Salami, insbesondere von sogenannten Peperoni-Würsten, ist das Verfahren jedoch weniger geeignet. Pizza-Salamiwürste sind relativ lang (etwa 80 bis 200 cm), so daß die geraffte Schlauchlänge häufig nicht optimal genutzt werden kann. Es bleiben dabei nicht weiter nutzbare Schlauchreste zurück.

Ein ähnliches Verfahren und eine ähnliche Vorrichtung sind in der DE-C 31 06 074 beschrieben. Auch hier wird zunächst eine Schlauchhülle von einer Vorratsrolle abgezogen. Sie wird mit dem geöffneten Ende auf eine Hülse aufgezogen, die dann auf das Füllrohr einer Wurstfüllmaschine geschoben wird. Die Hülse wird zurückgezogen und die Hülle vor dem Ende des Füllrohrs verschlossen und abgetrennt. Es werden allgemein Hüllenabschnitte aufgezogen, die nicht oder nicht wesentlich länger als das Füllrohr sind. Ein Raffen der Hülle auf dem Füllrohr erfolgt daher im eigentlichen Sinn nicht. Die Vorrichtung erlaubt zudem die Innenbewässerung einer außen beschichteten Schlauchhülle. Ansonsten erfolgt die Wässerung in einem separaten, wassergefüllten Behälter. Das Wässern bringt stets ein Hygienerisiko mit sich, denn das Wässerungsbad wird sehr leicht mit Keimen verunreinigt. Außerdem ist das Wässern oder Besprühen mit Wasser ein zusätzlicher Arbeitsschritt.

Über die Art der einzusetzenden Hüllen finden sich keine Angaben. Für sehr lange Würste, wie Pizzasalami, ist das Verfahren nur sehr bedingt geeignet. Das Rohwurstbrät müßte ein sehr langes Füllrohr passieren, wodurch es sich negativ verändert.

Aus diesem Grund wurde Pizzasalami bisher ausschließlich einzeln durch Handabfüllung hergestellt. Dazu wurden einseitig verschlossene, durch Tauchen in ein Wasserbad oder Besprühen mit Wasser vorbefeuchtete Abschnitte manuell auf ein relativ kurzes Füllrohr gerafft und dann portionsweise mit Brät gefüllt. Eine Automatisierung, beispielsweise nach dem in der DE-A 32 23 725 beschriebenen Verfahren, scheiterte daran, daß sehr häufig ein nicht unerheblicher Teil der gerafften Hülle übrig bleibt, weil er für eine weitere Pizzasalami nicht mehr lang genug ist.

Ausgehend von der DE-A 32 23 725 bestand daher die Aufgabe, das dort beschriebene Verfahren so zu modifizieren, daß bei der Herstellung der relativ langen Pizzasalamis kein Verschnitt mehr anfällt. Das Verfahren soll praktisch vollautomatisch ablaufen, so daß im Normalbetrieb keine Hilfskräfte benötigt werden. In dem Verfahren soll möglichst ein Textildarm verwendet werden, der ohne Wässerung zu verarbeiten ist. Der Textildarm muß darüber hinaus ausreichend durchlässig sein für Wasserdampf, Luftsauerstoff und gegebenenfalls auch Räucheraroma-Bestandteile, damit die Pizzasalami gegebenenfalls geräuchert werden und reifen kann.

Gelöst wird die Aufgabe durch ein Verfahren, bei dem jeweils nur so viel von dem schlauchförmigen Textildarm von der Rolle abgezogen wird wie für eine einzige Pizzasalami erforderlich ist. Der Darm wird dann auf ein relativ kurzes Füllrohr gerafft, abgetrennt und an dem dabei entstandenen Ende verschlossen.

Gegenstand der vorliegenden Anmeldung ist demgemäß ein Verfahren zur automatisierten Herstellung von Würsten, in dem eine schlauchförmige Wursthülle abschnittsweise von einer Vorratsrolle abgezogen, auf das Füllrohr einer Wurstfüllmaschine gerafft und abgetrennt wird, wobei das Verfahren dadurch gekennzeichnet ist, daß die schlauchförmige Wursthülle ein wasserdampf- und rauchdurchlässiger Textildarm mit Längsnaht in Rollenform ist, wovon jeweils nur soviel abgezogen, auf das Füllrohr gerafft, abgetrennt und an dem dabei entstandenen Ende verschlossen wird, wie für eine einzige Rohwurst erforderlich ist.

Der Textildarm umfaßt als Grundmaterial ein Gewebe, Gewirke, verfestigtes Vlies oder Spinnvlies aus Naturfaser, synthetischen Fasern oder Gemischen davon. Geeignete Naturfasern sind beispielsweise Baumwollfasern, Cellulosefasern (beispielsweise Leinen), Wolle oder Seide. Geeignete synthetische Fasern sind beispielsweise Fasern aus Polyamid, Polyester, Polyolefin (speziell Polypropylen), Regeneratcellulose (= Zellwolle), Polyvinylacetat, Polyacrylnitril oder Polyvinylchlorid bzw. aus den entsprechenden Copolymeren. Besonders bevorzugt ist ein dünnes, in Längs- und Querrichtung verstrecktes Gewebe aus Baumwolle, Zellwolle oder einem Gemisch von Baumwolle und Polyester, Baumwolle und Zellwolle oder Zellwolle und Polyester mit einem Flächengewicht von 8 bis 300 g/m², bevorzugt 20 bis 150 g/m², besonders bevorzugt 50 bis 100 g/m².

Vorzugsweise ist das Grundmaterial auf einer oder auf beiden Seiten beschichtet (auch tauchbeschichtet = foulardiert), laminiert oder auf sonstige Weise oberflächenbehandelt. Dafür eignen sich besonders Acrylatharze und Kunststoff-Blends, speziell Emulsionspolymerisate auf Basis von (C₁-C₆)Alkyl(meth)-acryiaten, insbesondere Butyl(meth)acrylat. Der Begriff (Meth)acrylat steht dabei wie üblich für Acrylat und/oder Methacrylat. Einheiten aus anderen Monomeren können hinzutreten, beispielsweise solche aus Styrol, α-Methyl-styrol oder Vinylacetat. Der Anteil der Einheiten aus solchen anderen Monomeren sollte 25 Gew.-%, bevorzugt 15 Gew.-%, nicht überschreiten. Geeignete Acrylatharze sind dem Fachmann bekannt, insbesondere aus der DE-A 31 47 519. Zum Beschichten des Grundmaterials geeignet sind ferner Viskose, die dann anschließend zu Cellulose regeneriert wird, und andere Beschichtungsflüssigkeiten, die Cellulose in derivatisierter oder nicht derivatisierter Form enthalten. Das Grundmaterial kann ferner mit Kollagenfasern, speziell mit Rinderkollagenfasern, beschichtet sein. Die Dicke der Beschichtung wird so gewählt, daß die für die Reifung der Wurst erforderliche Wasserdampf- und Sauerstoffdurchlässigkeit noch gegeben ist. Es können auch mehrere Schichten aufgetragen werden. Geeignete Verfahren und Vorrichtungen zum Beschichten sind dem Fachmann prinzipiell bekannt. Um das erwünschte "textile" Erscheinungsbild der Wursthülle nicht zu beeinträchtigen, sollte die Beschichtung nicht alle Zwischenräume zwischen den Fasern ausfüllen.

Während oder nach dem Beschichten wird das Grundmaterial zweckmäßig in Längs- und Querrichtung verstreckt. Das Ausmaß der Verstreckung ist abhängig unter anderem vom Flächengewicht, von der Konstruktion und von der Art des Materials. Das Flächenstreckverhältnis beträgt allgemein 1 bis 20 % in Längs- und Querrichtung, bevorzugt 3 bis 15 %, jeweils bezogen auf das Rohwarenmaß. Bei einem leichten Baumwoll- oder Zellwollgewebe oder einem Mischgewebe von Baumwolle und Polyester, Baumwolle und Zellwolle oder Zellwolle und Polyester mit einem Flächengewicht von 50 bis 100 g/m² wird beispielsweise auf etwa 3 bis 5 % über der Ausgangslänge bzw. -breite verstreckt. Dadurch wird verhindert, daß die Hülle beim späteren Reifen und Lagern der Wurst an dem Ende, an dem sie aufgehängt ist, dünner wird (also einen sogenannten Hals bildet) und am unteren Ende ausbeult.

Für das erfindungsgemäße Verfahren eignet sich insbesondere ein Textildarm mit einer Dehnbarkeit während des Füllens in Querrichtung von 1 bis 10 %. Dadurch ist gewährleistet, daß sich die Wurst leicht füllen läßt, prall auf dem Füllgut sitzt und beim Hängen während des Reifevorgangs nicht ausbeult.

Der Textildarm weist allgemein eine Wasserdampfdurchlässigkeit (WDD) von mehr als 50 g/m² d, bevorzugt mehr als 100 g/m² d, auf, bestimmt gemäß DIN 53122.

Das gegebenenfalls beschichtete Grundmaterial wird dann auf die passende Breite geschnitten, zu einem Schlauch geformt - beispielsweise mit Hilfe einer Formschulter - und fixiert. Die Fixierung kann durch eine genähte Naht, eine Siegel- und/oder eine Klebenaht erfolgen. Beim Kleben werden die Längskanten des Materials in der Regel übereinander gelegt (überlappendes Kleben) oder sie werden mit Hilfe eines Siegel- oder Klebestreifens (Tape) miteinander verbunden. Die Längskanten des Textilmaterials können auch so verbunden werden, daß ein überstehender Teil entsteht. Bei einem späteren Abziehen der Hülle kann dieser Teil als sogenannte Aufreißfahne genutzt werden.

Der in dem erfindungsgemäßen Verfahren eingesetzte Textildarm hat allgemein einen Durchmesser (Nennkaliber) von 30 bis 120 mm, bevorzugt von 40 bis 80 mm. Für Pizzasalami ist hat sich ein Kaliber von etwa 45 bis 55 mm als günstig erwiesen. Der Textildarm wird aufgerollt. Auf einer Rolle befinden sich zweckmäßig mindestens 500 m, bevorzugt mindestens 900 m, des Darms und zwar ohne eine (quer verlaufende) Klebestelle und ohne Quernaht. Besonders günstig ist eine Rollenlänge von 700 bis 2.500 m.

Der in dem erfindungsgemäßen Verfahren einzusetzende Textildarm wird vorzugsweise trocken gefüllt, d.h. eine Vorwässerung oder Vorbefeuchtung ist nicht erforderlich, kann in Ausnahmefällen jedoch zweckmäßig sein. Gegebenenfalls ist die Hülle geölt, beispielsweise mit einem Triglycerid, einem pflanzlichen oder synthetischen Öl, insbesondere einem Paraffin.

Der Textildarm wird in der für Rohwurst, speziell Pizzasalami, üblichen Länge in exakt vorbestimmter Weise von der Rolle abgezogen. Für Rohwurst ist das etwa eine Länge von 40 bis 80 cm, für Pizzasalami deutlich mehr (etwa 80 bis 200 cm, bevorzugt 120 bis 180 cm). Er wird dann auf ein relativ kurzes Rohr der Füllvorrichtung aufgezogen und gerafft. Das Rohr hat allgemein einen relativ großen Durchmesser (etwa 28 bis 60 mm) und eine Länge von 20 bis 60 cm, bevorzugt etwa 25 cm. Die Vorrichtung selbst kann dabei einen Aufbau haben, wie er in der DE-A 32 23 725 beschrieben ist.

Nach dem Aufziehen auf das Füllrohr wird der Textildarm auf die vorbestimmte, exakte Länge geschnitten und vor dem Ende des Füllrohrs mit einem Anfangsverschluß versehen. Das ist zweckmäßig ein Metall- oder Kunststoffclip, kann jedoch auch eine Garnabbindung oder ein durch Abdrehen und Verkleben oder Verschweißen, gegebenenfalls unter Einwirkung von Druck, hergestellter Verschluß sein. Der Anfangsverschfuß, speziell der Anfangsclip, ist vorteilhaft mit einer Schlaufe zum Aufhängen der Wurst verbunden.

Vorzugsweise wird das erfindungsgemäße Verfahren mit Hilfe eines Füll/Clip-Automaten durchgeführt, der über mehrere, auf einem Revolverkopf drehbar angeordnete Füllrohre verfügt. Als besonders zweckmäßig hat sich eine Ausführungsform mit einem Revolverkopf mit 2 Füllrohren erwiesen. Der füllfertige Darmabschnitt wird von federnd gelagerten Greifern abrutschsicher gehalten und im Rhythmus des Füll/Clip-Ablaufs in die Füllposition geschwenkt. Über einen Längenanschlag oder eine Füllerportionierung gesteuert, wird der der Textildarm mit Brät gefüllt, nach beendetem Ausstoß verschlossen und gegebenenfalls automatisch mit einer Aufhängeschlaufe versehen. Parallel zum Füll/Clip-Vorgang wird auf dem ausgeschwenkten freien Füllrohr ein neuer Hüllenabschnitt in exakt vorbestimmter Länge aufgezogen, verschlossen und abgeschnitten. Eine Abmeterungseinheit bestimmt dabei die vorgewählte Hüllenlänge. Eine spezielle Öffnungs- und Transportvorrichtung fördert die vorbestimmte Hüllenlänge über ein innenliegendes Trägerrohr auf ein bereitstehendes Füllrohr, zieht die Hülle straff, setzt den Verschluß, wenn sich das Trägerrohr zurückbewegt hat, und schneidet schließlich die Hülle ab.

Das erfindungsgemäße Verfahren erlaubt überraschenderweise eine mindestens ebenso schnelle Produktionsgeschwindigkeit wie das aus der DE-A 32 23 725 bekannte. Pro Stunde lassen sich beispielsweise bis zu 1.500 m einer Pizzasalami mit einem Durchmesser von 45 bis 55 mm herstellen. In einer bevorzugten Ausführungsform hat die Wurst eine Länge von mehr als 1,50 m, besonders bevorzugt sogar von mehr als 1,60 m.

## Patentansprüche

1. Verfahren zur automatisierten Herstellung von Würsten, in dem eine schlauchförmige Wursthülle abschnittsweise von einer Vorratsrolle abgezogen, auf dem Füllrohr einer Wurstfüllmaschine gerafft und abgetrennt wird, **dadurch gekennzeichnet, daß** die schlauchförmige Wursthülle ein wasserdampf- und rauchdurchlässiger Textildarm mit Längsnaht in Rollenform ist, wovon jeweils nur soviel abgezogen, auf das Füllrohr gerafft, abgetrennt und an dem dabei entstandenen Ende verschlossen wird, wie für eine einzige Wurst erforderlich ist.

2. Verfahren gemäß Anspruch 1, **dadurch gekennzeichnet, daß** der Textildarm als Grundmaterial ein Gewebe, Gewirke, verfestigtes Vlies oder Spinnvlies aus Naturfaser, synthetischen Fasern oder Gemischen davon umfaßt.

3. Verfahren gemäß Anspruch 2, **dadurch gekennzeichnet, daß** die Naturfasern aus Baumwolle, Zellwolle, Leinen, Wolle oder Seide bestehen.

4. Verfahren gemäß Anspruch 2, **dadurch gekennzeichnet, daß** die synthetischen Fasern aus Polyamid, Polyester, Polyolefin (speziell Polypropylen), Regeneratcellulose (= Zellwolle), Polyacrylnitril und/oder Polyvinylchlorid bestehen.

5. Verfahren gemäß einem oder mehreren der Ansprüche 2 bis 4, **dadurch gekennzeichnet, daß** das Grundmaterial ein in Längs- und Querrichtung verstrecktes Gewebe aus Baumwolle, Zellwolle oder einem Gemisch von Baumwolle und Polyester, Baumwolle und Zellwolle oder Zellwolle und Polyester mit einem Flächengewicht von 8 bis 300 g/m², bevorzugt 20 bis 150 g/m², besonders bevorzugt von 50 bis 100 g/m², ist.

6. Verfahren gemäß einem oder mehreren der Ansprüche 2 bis 5, **dadurch gekennzeichnet, daß** das Grundmaterial auf einer oder auf beiden Seiten beschichtet ist.

7. Verfahren gemäß Anspruch 6, **dadurch gekennzeichnet, daß** die Beschichtung Acrylatharze, regenerierte Cellulose oder Kollagenfasern umfaßt.

8. Verfahren gemäß einem oder mehreren der Ansprüche 1 bis 7, **dadurch gekennzeichnet, daß** der Textildarm eine Wasserdampfdurchlässigkeit von mehr als 50 g/m² d, bevorzugt von mehr als 100 g/m² d, aufweist.

9. Verfahren gemäß einem oder mehreren der Ansprüche 1 bis 8, **dadurch gekennzeichnet, daß** die Längsnaht genäht, geschweißt, geklebt, gesiegelt oder mit Hilfe eines Siegel- oder Klebestreifens (Tape) hergestellt ist.

10. Verfahren gemäß Anspruch 9, **dadurch gekennzeichnet, daß** ein die Längsnaht überstehender Teil eine Aufreißfahne bildet.

11. Verfahren gemäß einem oder mehreren der Ansprüche 1 bis 10, **dadurch gekennzeichnet, daß** der Textildarm einen Durchmesser (Nennkaliber) von 30 bis 120 mm, bevorzugt von 40 bis 80 mm, hat.

12. Verfahren gemäß einem oder mehreren der Ansprüche 1 bis 11, **dadurch gekennzeichnet, daß** sich auf der Vorratsrolle mindestens 500 m, bevorzugt mindestens 900 m, eines von quer verlaufenden Klebestellen und Quernähten freien Textildarms befinden.

13. Verfahren gemäß einem oder mehreren der Ansprüche 1 bis 12, **dadurch gekennzeichnet, daß** der Textildarm ohne Vorwässerung oder Vorbefeuchtung gefüllt wird.

14. Verfahren gemäß einem oder mehreren der Ansprüche 1 bis 13, **dadurch gekennzeichnet, daß** das Ende des vor dem Füllrohr abgetrennten Textildarms mit einem Kunststoff- oder Metallclip, durch Abbinden oder durch Abdrehen und Verkleben oder Verschweißen, gegebenenfalls unter Einwirkung von Druck, verschlossen wird.

15. Verfahren gemäß einem oder mehreren der Ansprüche 1 bis 14, **dadurch gekennzeichnet, daß** damit Wurst einer Länge von 1 m oder mehr, bevorzugt mehr als 1,50 m, besonders bevorzugt mehr als 1,60 m, hergestellt wird.

16. Verfahren gemäß Anspruch 15, **dadurch gekennzeichnet, daß** Rohwurstbrät, bevorzugt Brät für Pizzasalami, verwendet wird.

## Claims

1. A method for the automated production of sausages in which a tubular sausage casing is taken off in sections from a supply roll, shirred on the stuffing tube of a sausage stuffing machine and separated off, which comprises the tubular sausage casing being a water vapor- and smoke-permeable textile skin having a longitudinal seam in roll form, of which in each case only as much is taken off, shirred on the stuffing tube, separated off and closed at the resultant end as is required for a single sausage.

2. The method as claimed in claim 1, wherein the textile skin comprises, for as base material, a woven fabric, knitted fabric, consolidated nonwoven or spun nonwoven of natural fiber, synthetic fibers or mixture thereof.

3. The method as claimed in claim 2, wherein the natural fibers consist of cotton, viscose staple, linen, wool or silk.

4. The method as claimed in claim 2, wherein the synthetic fibers consist of polyamide, polyester, polyolefin (especially polypropylene), regenerated cellulose (= viscose staple), polyacrylonitrile and/or poly(vinyl chloride).

5. The method as claimed in one or more of claims 2 to 4, wherein the base material is a longitudinally and transversely stretched fabric of cotton, viscose staple or a mixture of cotton and polyester, cotton and viscose staple, or viscose staple and polyester, having a weight per unit area of 8 to 300 g/m², preferably 20 to 150 g/m², particularly preferably 50 to 100 g/m².

6. The method as claimed in one or more of claims 2 to 5, wherein the base material is coated on one or both sides.

7. The method as claimed in claim 6, wherein the coating comprises acrylate resins, regenerated cellulose or collagen fibers.

8. The method as claimed in one or more of claims 1 to 7, wherein the textile skin has a water vapor permeability of greater than 50 g/m²d, preferably greater than 100 g/m²d.

9. The method as claimed in one or more of claims 1 to 8, wherein the longitudinal seam is a sewn seam, a welded and/or glued seam, or the longitudinal seam is produced with the aid of a welding or adhesive strip (tape).

10. The method as claimed in claim 9, wherein a part which projects beyond the longitudinal seam serves as a tear off tape.

11. The method as claimed in one or more of claims 1 to 10, wherein the textile skin has a diameter (nominal caliber) of 30 to 120 mm, preferably 40 to 80 mm.

12. The method as claimed in one or more of claims 1 to 11, wherein, on the supply roll, there are situated at least 500 m, preferably at least 900 m, of a textile skin free from transversely running adhesive sites and transverse seams.

13. The method as claimed in one or more of claims 1 to 12, wherein the textile skin is stuffed without presoaking or premoistening.

14. The method as claimed in one or more of claims 1 to 13, wherein the end of the textile skin separated off before the stuffing tube is closed using a plastic or metal clip, by tying or by twisting and gluing or welding, if appropriate with the action of pressure.

15. The method as claimed in one or more of claims 1 to 14, by means of which sausage is produced having a length of 1m or more, preferably greater than 1.50m, particularly preferably greater than 1.60m.

16. The method as claimed in claim 16, wherein raw sausage meat, preferably sausage meat for pizza salami is used.

## Revendications

1. Procédé de préparation automatisée de saucissons, dans lequel une enveloppe à saucisson en forme de boyau est extraite par morceaux d'un rouleau de réserve, est enfichée sur le tube de remplissage d'une machine de remplissage de saucissons et est découpée, **caractérisé en ce que** l'enveloppe à saucisson en forme de boyau flexible est un boyau textile perméable à la vapeur d'eau et à la fumée, doté d'un cordon longitudinal et en forme de rouleau, dont on extrait uniquement la longueur nécessaire pour un saucisson pour l'enficher sur le tube de remplissage, la découper et la fermer ensuite à l'extrémité ainsi obtenue.

2. Procédé selon la revendication 1, **caractérisé en ce que** le boyau textile présente comme matériau de base un tissu, un tricot, un feutre solidifié ou un feutre filé en fibres naturelles, en fibres synthétiques ou en mélange de ces fibres.

3. Procédé selon la revendication 2, **caractérisé en ce que** les fibres naturelles sont constituées de coton, de cellulose, de lin, de laine ou de soie.

4. Procédé selon la revendication 2, **caractérisé en ce que** les fibres synthétiques sont constituées de polyamide, de polyester, de polyoléfine (et en particulier de polypropylène), de cellulose régénérée (= laine végétale), de polyacrylonitrile et/ou de poly(chlorure de vinyle).

5. Procédé selon l'une ou plusieurs des revendications 2 à 4, **caractérisé en ce que** le matériau de base est un tissu étiré dans le sens de sa longueur et dans le sens transversal, en coton, en laine végétale ou en un mélange de coton et de polyester, de coton et de laine végétale ou de laine végétale et de polyester, dont le poids par unité de surface est de 8 à 300 g/m², de préférence de 20 à 150 g/m² et de façon particulièrement préférable de 50 à 100 g/m².

6. Procédé selon l'une ou plusieurs des revendications 2 à 5, **caractérisé en ce que** le matériau de base est revêtu sur une face ou sur ses deux faces.

7. Procédé selon la revendication 6, **caractérisé en ce que** le revêtement contient une résine d'acrylate, de la cellulose régénérée ou des fibres de collagène.

8. Procédé selon l'une ou plusieurs des revendications 1 à 7, **caractérisé en ce que** le boyau textile présente une perméabilité à la vapeur d'eau supérieure à 50 g/m².j et de préférence de plus de 100 g/m².j.

9. Procédé selon l'une ou plusieurs des revendications 1 à 8, **caractérisé en ce que** le cordon longitudinal est cousu, soudé, collé, scellé ou réalisé à l'aide d'un ruban de scellement ou d'un ruban adhésif.

10. Procédé selon la revendication 9, **caractérisé en ce qu'**une partie qui déborde du cordon longitudinal forme une patte de déchirure.

11. Procédé selon l'une ou plusieurs des revendications 1 à 10, **caractérisé en ce que** le boyau textile a un diamètre (calibre nominal) de 30 à 120 mm et de préférence de 40 à 80 mm.

12. Procédé selon l'une ou plusieurs des revendications 1 à 11, **caractérisé en ce que** le rouleau de réserve contient au moins 500 m et de préférence au moins 900 m d'un boyau textile exempt d'emplacements collés dans le sens transversal et exempt de cordons transversaux.

13. Procédé selon l'une ou plusieurs des revendications 1 à 12, **caractérisé en ce que** le boyau textile est rempli sans être préimprégné d'eau ou préhumidifié.

14. Procédé selon l'une ou plusieurs des revendications 1 à 13, **caractérisé en ce que** l'extrémité du boyau textile découpée devant le tube de remplissage est fermée à l'aide d'une pince en matière synthétique ou en métal, par nouage ou par rabattement et collage ou soudage, éventuellement sous l'action d'une pression.

15. Procédé selon l'une ou plusieurs des revendications 1 à 14, **caractérisé en ce qu'**on l'utilise pour préparer un saucisson d'une longueur de 1 m ou davantage, de préférence de plus de 1,50 m et de façon particulièrement préférable de plus de 1,60 m.

16. Procédé selon la revendication 15, **caractérisé en ce que** l'on y utilise de la chair à saucisson brute et de préférence de la chair à saucisson pour salami à pizza.
